# EUROPÄISCHE PATENTSCHRIFT

(11) **EP 3 505 830 B1**
(45) Veröffentlichungstag und Bekanntmachung des Hinweises auf die Patenterteilung: **24.03.2021**
(21) Anmeldenummer: 18213259.7
(22) Anmeldetag: 18.12.2018
(51) Int. Cl.: F24C 15/20

(54) **DUNSTABZUGSVORRICHTUNG ZUM ABZUG VON KOCHDÜNSTEN NACH UNTEN**
VAPOUR EXTRACTION DEVICE FOR REMOVING COOKING VAPOURS DOWNWARDS
DISPOSITIF FORMANT HOTTE ASPIRANTE PERMETTANT D'ASPIRER LES VAPEURS DE CUISSON VERS LE BAS

(30) Priorität: 27.12.2017 DE 102017223828
(43) Veröffentlichungstag der Anmeldung: 03.07.2019
(60) Teilanmeldung: 20217002.3
(73) Patentinhaber: Bruckbauer, Wilhelm, 83115 Neubeuern (DE)
(72) Erfinder: Neunhäuserer, Daniel, 6167 Neustift (AT); Lacatusu, Philipp, 83131 Nußdorf am Inn (DE); Schadeck, Alexander, 83229 Aschau i. Chiemgau (DE); Eschbaum, Philipp, 83064 Raubling (DE); Gößler, Siegfried, 83043 Bad Aibling (DE); Blersch, Mario, 83098 Brannenburg (DE)
(74) Vertreter: Rau, Schneck & Hübner Patentanwälte Rechtsanwälte PartGmbB

(56) Entgegenhaltungen:
- WO-A1-2017/089925
- WO-A1-2019/038632
- DE-A1-102011 082 924
- DE-A1-102016 109 136
- US-A- 4 846 146
- US-A- 4 962 694

## Beschreibung

Die Erfindung betrifft eine Dunstabzugsvorrichtung. Ferner richtet sich die Erfindung auf eine Dunstabzugsvorrichtung mit einem Filter sowie auf ein Kochfeldsystem.

Aus der WO 2017/103708 A1 ist eine Dunstabzugsvorrichtung zum Abzug von Kochdünsten nach unten bekannt. Die Dunstabzugsvorrichtung umfasst einen Lüfter zum Ansaugen der Kochdünste und einen stromabwärts des Lüfters angeordneten Filtersitz, an dem ein Filter zum Filtern der Kochdünste anordenbar ist. Zum reversiblen Entnehmen des Filters weist die Dunstabzugsvorrichtung eine Entnahmeöffnung auf, welche angrenzend an eine Einströmöffnung eine Kochstellenplatte eines Kochfeldes durchdringt. Im Bereich der Entnahmeöffnung ist die Kochstellenplatte mechanisch geschwächt und steht für Kochstellen zum Erwärmen von Kochgut nicht zur Verfügung. Die lediglich zu Wartungszwecken erforderliche Entnahmeöffnung steht einem schlichten und aufgeräumten Erscheinungsbild der Abzugsvorrichtung entgegen.

Derartige Dunstabzugsvorrichtungen sind ferner bekannt aus der WO 2019/038632 A1, der US 4,846,146, der US 4,962,694 und der DE 10 2016 109 136 A1.

Es ist eine Aufgabe der Erfindung, die Handhabbarkeit einer Dunstabzugsvorrichtung zu verbessern.

Diese Aufgabe wird durch eine Dunstabzugsvorrichtung mit den Merkmalen des Anspruchs 1 gelöst. Erfindungsgemäß wurde erkannt, dass der sich zwischen dem stromabwärts des Lüfters angeordneten Filtersitz und der Einströmöffnung erstreckende Filterwechselraum derart ausgebildet sein kann, dass der mindestens eine Filter aus dem Filtersitz durch die Einströmöffnung reversibel entnehmbar ist. Durch die Zugänglichkeit der Einströmöffnung und damit des Filters von einem Bereich oberhalb der Dunstabzugsvorrichtung entfällt eine aufwändige und für den Benutzer komplizierte Entnahme über einen Unterraum der Dunstabzugsvorrichtung. Die reversible Entnehmbarkeit des Filters durch die Einströmöffnung gewährleistet, dass eine an die Einströmöffnung angrenzende Fläche, insbesondere eine Oberseite eines Kochfeldes, von zusätzlichen Entnahmeöffnungen freigehalten wird. Die Oberseite des Kochfeldes steht somit zur Erwärmung von Kochgut zur Verfügung. Auf eine zusätzliche Abdichteinrichtung zum Schutz derartiger Entnahmeöffnungen vor übergelaufenen Flüssigkeiten kann verzichtet werden. Eine strukturelle Schwächung des Kochfeldes durch Einbringen zusätzlicher Entnahmeöffnungen unterbleibt. Die Abzugsvorrichtung weist insgesamt ein schlichtes und aufgeräumtes Erscheinungsbild auf.

Der Filterwechselraum stellt eine räumliche Verbindung zwischen der Einströmöffnung und dem Filtersitz her. In dem Filterwechselraum ist der mindestens eine Filter zwischen dem Filtersitz und der Einströmöffnung verlagerbar. Hierzu weist der Filterwechselraum an jeder Stelle einen inneren freien Querschnitt auf, der größer ist als ein Querschnitt des mindesten einen Filters. Der Filterwechselraum kann, insbesondere abschnittsweise, durch einen Strömungskanal zum Führen der Kochdünste ausgebildet sein. Vorteilhaft wird hierdurch erreicht, dass zur Ausbildung des Filterwechselraums auf zusätzliche Strukturen verzichtet werden kann. Alternativ kann der Filterwechselraum, insbesondere abschnittsweise, außerhalb des Strömungskanals ausgebildet sein.

Vorzugsweise ist der Filter stromaufwärts des Filtersitzes angeordnet. Durch die Anordnung des Filters stromaufwärts des Filtersitzes drückt der Kochdunststrom den Filter beim Betrieb der Dunstabzugsvorrichtung gegen den Filtersitz. Hierdurch ist der Filter besonders fest, insbesondere dicht, an dem Filtersitz anbringbar.

Gemäß einem Aspekt der Erfindung weist die Dunstabzugsvorrichtung eine Einströmöffnung zum Eintritt der Kochdünste in die Dunstabzugsvorrichtung auf. Hierunter ist zu verstehen, dass die erfindungsgemäße Dunstabzugsvorrichtung mindestens eine Einströmöffnung aufweist. Die Dunstabzugsvorrichtung kann auch mindestens zwei, insbesondere mindestens drei, insbesondere mindestens vier Einströmöffnungen aufweisen. Die Einströmöffnung ist vorzugsweise rund, insbesondere kreisförmig oder nichtkreisförmig, insbesondere oval, oder in Form eines Vielecks, insbesondere in Form eines Rechtecks, insbesondere in Form eines Quadrats, ausgebildet.

Gemäß einem Aspekt der Erfindung weist die Dunstabzugsvorrichtung mindestens einen Lüfter auf. Die Dunstabzugsvorrichtung kann auch mindestens zwei, insbesondere mindestens drei, insbesondere mindestens vier, Lüfter aufweisen. Der mindestens eine Lüfter kann in einer Draufsicht beabstandet zu einem geometrischen Flächenschwerpunkt der Einströmöffnung angeordnet sein. Alternativ kann der mindestens eine Lüfter konzentrisch zu der Einströmöffnung angeordnet sein. Vorteilhaft wird durch die konzentrische Anordnung des Lüfters gegenüber der Einströmöffnung erreicht, dass Kochdünste strömungsmechanisch besonders effizient angesaugt werden. Eine Drehachse des mindestens einen Lüfters kann horizontal oder vertikal orientiert sein.

An dem Filtersitz ist der mindestens eine Filter anordenbar. Vorzugsweise sind an dem Filtersitz mindestens zwei, insbesondere mindestens drei, insbesondere mindestens vier, insbesondere mindestens fünf, Filter anordenbar. Durch die Anordnung mehrerer Filter an dem Filtersitz kann die Filterfläche und/oder eine Strömungsöffnung des Filtersitzes vergrößert werden, wobei die reversible Entnehmbarkeit des mindestens einen Filters aus dem Filtersitz durch die Einströmöffnung erhalten bleibt. Vorzugsweise sind die mindestens zwei Filter, insbesondere fluiddicht, aneinander anbringbar ausgebildet.

Vorzugsweise ist der mindestens eine Filter manuell, insbesondere händisch und/oder werkzeuglos, aus dem Filtersitz durch die Einströmöffnung, entnehmbar. Hierzu können der Filterwechselraum und/oder der Filtersitz entsprechend ausgebildet sein.

Gemäß einem Aspekt der Erfindung ist der mindestens eine Filter in einem Überdruck-Kanalabschnitt angeordnet. Unter dem Überdruck-Kanalabschnitt wird der stromabwärts des mindestens einen Lüfters gelegene Abschnitt des Strömungskanals verstanden. Vorteilhaft wird hierdurch erreicht, dass der Strömungswiderstand des mindestens einen Filters einen geringeren Einfluss auf die Abzugsleistung der Dunstabzugsvorrichtung hat, als ein in einem Unterdruck-Kanalabschnitt angeordneter Filter. Unter dem Unterdruck-Kanalabschnitt wird der stromaufwärts des mindestens einen Lüfters gelegene Abschnitt des Strömungskanals verstanden. Zudem werden durch die reversible Entnehmbarkeit des Filters durch die Einströmöffnung ein regelmäßiger Filterwechsel und/oder eine Filterreinigung gefördert. Hierdurch kann der Strömungswiderstand des Filters reduziert und die Funktion der Dunstabzugsvorrichtung aufrechterhalten werden. Gemäß einem Aspekt der Erfindung ist in dem Filterwechselraum eine Führungseinrichtung zum geführten Verlagern des mindestens einen Filters angeordnet. Die Führungseinrichtung kann durch eine Wandung des Filterwechselraums ausgebildet sein. Vorzugsweise ist die Führungseinrichtung zur linearen Lagerung des mindestens einen Filters ausgebildet. Bei der linearen Lagerung kann die Verlagerung ausschließlich entlang einer Linie erfolgen. Die Führungseinrichtung kann zusammen mit dem mindestens einen Filter eine Nut-Feder-Verbindung und/oder eine Kulissenführung ausbilden. Die Führungseinrichtung kann auch in Form eines Kanals ausgebildet sein, in dem der mindestens eine Filter linear verschiebbar gelagert ist. Vorteilhaft wird hierdurch erreicht, dass der mindestens eine Filter zuverlässig, insbesondere ohne ein Verkanten, aus dem Filtersitz entnehmbar ist.

Gemäß einem Aspekt der Erfindung weist der Filtersitz ein Dichtmittel und/oder eine Dichtfläche zum fluiddichten Verbinden mit dem mindestens einen Filter auf. Vorzugsweise umgibt das Dichtmittel die Strömungsöffnung des Filtersitzes vollständig. Das Dichtmittel kann dazu ausgebildet sein, mit einer Dichtfläche des mindestens einen Filters zusammenzuwirken. Alternativ kann auch der Filtersitz die Dichtfläche und der mindestens eine Filter das Dichtmittel aufweisen. Durch die fluiddichte Anbindung des mindestens einen Filters an den Filtersitz wird gewährleistet, dass der gesamte Kochdunststrom durch den mindestens einen Filter hindurchgeführt wird und diesen nicht umströmt.

Gemäß einem weiteren Aspekt der Erfindung ist in dem Filterwechselraum ein Transportkanal angeordnet, durch den hindurch der mindestens eine Filter verlagerbar ist. Der Transportkanal kann sich zwischen dem Unterdruck-Kanalabschnitt und dem Filtersitz erstrecken. Der Transportkanal ist vorzugsweise außerhalb des mindestens einen Lüfters angeordnet. Vorteilhaft ermöglicht der Transportkanal eine besonders kurze Verbindung zwischen dem Filtersitz und dem Unterdruck-Kanalabschnitt. Die Länge des Transportkanals ist vorzugsweise geringer als 200 mm, insbesondere geringer als 150 mm, insbesondere geringer als 100 mm, insbesondere geringer als 70 mm, insbesondere geringer als 50 mm, insbesondere geringer als 25 mm, insbesondere geringer als 10 mm. Hierdurch wird die reversible Entnahme des Filters aus dem Filtersitz ermöglicht, ohne dass dieser durch ein Lüfter-Gehäuse des Lüfters geführt werden muss.

Vorzugsweise ist der Transportkanal fluiddicht ausgebildet und fluiddicht an den Unterdruck-Kanalabschnitt und den Überdruck-Kanalabschnitt angeschlossen. Vorteilhaft wird hierdurch erreicht, dass sowohl der Unterdruck-Kanalabschnitt als auch der Überdruck-Kanalabschnitt gegenüber der Umgebung fluiddicht ausgeführt sind.

Gemäß einem weiteren Aspekt der Erfindung ist in dem Filterwechselraum eine Verschlussklappe zum reversiblen Verschließen gegen eine Durchströmung mit den Kochdünsten angeordnet. Vorzugsweise ist die Verschlussklappe dazu ausgebildet, einen mit dem Überdruck-Kanalabschnitt verbundenen Abschnitt des Filterwechselraums fluiddicht von einem mit dem Überdruck-Kanalabschnitt verbundenen Abschnitt des Filterwechselraums zu trennen. Vorzugsweise ist die Verschlussklappe zum Verschluss des Transportkanals ausgebildet. Die Verschlussklappe kann innerhalb des Transportkanals oder an einem der beiden Enden des Transportkanals angeordnet sein. Es kann auch an je einem Ende des Transportkanals eine Verschlussklappe angeordnet sein. Die Verschlussklappe kann zwischen einer Verschlussstellung und einer Offenstellung verlagerbar sein. Die Verschlussklappe kann beispielsweise als gelenkig gelagerte Klappe oder als verschiebbar gelagerte Scheibe ausgebildet sein. Der mindestens eine Filter kann in der Offenstellung reversibel aus dem Filtersitz entnehmbar sein. Vorteilhaft wird hierdurch erreicht, dass in der Verschlussstellung kein Druckausgleich zwischen dem Überdruck-Kanalabschnitt und dem Unterdruck-Kanalabschnitt erfolgen kann.

Vorzugsweise wird die Verschlussklappe bei einer Verlagerung in die Offenstellung in Richtung des Überdruck-Kanalabschnitts bewegt. Hierdurch wird erreicht, dass ein Druckunterschied zwischen dem Überdruck-Kanalabschnitt und dem Unterdruck-Kanalabschnitt das Schließen der Verschlussklappe im Betrieb der Dunstabzugsvorrichtung begünstigt.

Gemäß einem weiteren Aspekt der Erfindung weist die Dunstabzugsvorrichtung eine Steuereinheit zum Betreiben des mindestens einen Lüfters auf. Die Dunstabzugsvorrichtung kann eine mit der Steuereinheit in Signalverbindung stehende Sensoreinrichtung aufweisen. Vorzugsweise ist die Steuereinheit zum Unterbrechen des Betriebs des mindestens einen Lüfters anhand eines Signals der Steuereinrichtung ausgebildet. Vorteilhaft wird hierdurch erreicht, dass der Betrieb des mindestens einen Lüfters unterbrochen werden kann, sofern eine Gefahr für einen Nutzer besteht und/oder die Dunstabzugsvorrichtung nicht betriebsbereit ist.

Gemäß einem weiteren Aspekt der Erfindung weist die Sensoreinrichtung einen Filter-Sensor zum Erfassen einer Anordnung des mindestens einen Filters an dem Filtersitz auf. Der Filter-Sensor kann als Endanschlag-Sensor, insbesondere als Druckschalter oder als Magnetschalter, oder in Form einer Lichtschranke, ausgebildet sein. Durch das Erfassen der Anordnung des mindestens einen Filters an dem Filtersitz wird gewährleistet, dass die Steuereinheit anhand eines Signals der Sensoreinrichtung den Betrieb des mindestens einen Lüfters bei fehlender und/oder falscher Anordnung des mindestens einen Filters an dem Filtersitz unterbrechen kann.

Gemäß einem Aspekt der Erfindung umfasst die Sensoreinrichtung einen Verschlussklappen-Sensor zum Erfassen einer Anordnung der Verschlussklappe. Vorzugsweise ist der Verschlussklappen-Sensor als Taster oder als Kippschalter oder als Magnetschalter oder als induktiver Schalter oder als kapazitiver Schalter oder in Form einer Lichtschranke ausgebildet. Vorteilhaft wird hierdurch erreicht, dass die Steuereinheit aufgrund eines Signals der Sensoreinrichtung den Betrieb des mindestens einen Lüfters bei einer Anordnung der Verschlussklappe in der Offenstellung unterbrechen kann.

Gemäß einem weiteren Aspekt der Erfindung weist die Strömungsöffnung des Filtersitzes eine Hauptabmessung auf, welche größer ist als eine Hauptabmessung der Einströmöffnung. Der Strömungsquerschnitt des Strömungskanals kann somit im Bereich des mindestens einen Filters relativ zu einer Hauptabmessung der Einströmöffnung besonders groß ausgebildet sein. Vorteilhaft wird hierdurch erreicht, dass das Verhältnis zwischen Filterwirkung und Druckverlust besonders groß ist, wobei die Dunstabzugsvorrichtung besonders effizient betrieben werden kann.

Vorzugsweise beträgt das Verhältnis zwischen der Hauptabmessung der Strömungsöffnung und der Hauptabmessung der Einströmöffnung mindestens 1, insbesondere mindestens 1,2, insbesondere mindestens 1,5, insbesondere mindestens 2, insbesondere mindestens 2,5, insbesondere mindestens 3.

Gemäß einem weiteren Aspekt der Erfindung ist eine Öffnungsfläche der Strömungsöffnung größer als eine Einströmfläche der Einströmöffnung. Vorzugsweise beträgt das Verhältnis zwischen der Öffnungsfläche und der Einströmöffnung mindestens 1, insbesondere min 1,5, insbesondere mindestens 2, insbesondere mindestens 2,5, insbesondere mindestens 3. Vorteilhaft wird hierdurch erreicht, dass das Verhältnis zwischen einer Filterwirkung des mindestens einen Filters und einem Druckverlust über den mindestens einen Filter besonders hoch ist.

Gemäß einem weiteren Aspekt der Erfindung weist die Dunstabzugsvorrichtung eine Antriebseinrichtung zum zumindest teilweise automatisierten Verlagern des mindestens einen Filters in dem Filterwechselraum auf. Die Antriebseinrichtung kann einen Antriebsmotor und ein Antriebsgetriebe aufweisen. Vorzugsweise steht die Antriebseinrichtung, insbesondere das Antriebsgetriebe, in Eingriff mit dem mindestens einen Filter. Der mindestens eine Filter kann hierzu einen Antriebs-Eingriff aufweisen. Vorzugsweise ist die Antriebseinrichtung zum Verlagern des mindestens einen Filters an den Filtersitz ausgebildet. Hierdurch kann eine besonders exakte Positionierung des mindestens einen Filters an dem Filtersitz erreicht werden. Vorzugsweise wird der mindestens eine Filter zunächst manuell, insbesondere von Hand, in den Filterwechselraum eingebracht, bevor der mindestens eine Filter mittels der Antriebseinrichtung an den Filtersitz verlagert wird.

Die Antriebseinrichtung kann mit dem mindestens einen Filter über ein Zahnrad oder einen Riemen, insbesondere einen Zahnriemen, oder einen Linearantrieb in Verbindung stehen.

Im Folgenden sind weitere Merkmale der erfindungsgemäßen Dunstabzugsvorrichtung angeführt. Welche frei mit den bislang genannten Merkmalen kombinierbar sind.

Der mindestens eine Lüfter kann als Radial-Lüfter beziehungsweise als Zentrifugal-Lüfter oder als Axial-Lüfter ausgebildet sein. Erfindungsgemäß weist die Dunstabzugsvorrichtung zwischen der Einströmöffnung und einer Unterseite des Unterdruck-Kanalabschnitts und/oder einer Unterseite des mindestens einen Lüfters eine Bauhöhe von höchstens 250 mm, insbesondere höchstens 220 mm, insbesondere höchstens 200 mm, insbesondere höchstens 175 mm, insbesondere höchstens 150 mm auf.

Eine weitere Aufgabe der Erfindung besteht darin, eine Dunstabzugsvorrichtung mit einem verbesserten Filter zu schaffen.

Gemäß einem Aspekt der Erfindung, weist die Dunstabzugsvorrichtung einen Filter auf, der reversibel verformbar ausgebildet ist. Unter der reversiblen Verformbarkeit wird verstanden, dass es bei dem Verformen nicht zu einem mechanischen Versagen des Filters kommt. Vorzugsweise ist der Filter rein elastisch reversibel verformbar. Der Filter kann als Geruchsfilter ausgebildet sein. Der Filter kann auch als Fettfilter und/oder als Feuchtigkeitsfilter ausgebildet sein. Der Filter kann in Richtung seiner Hauptabmessung dehnbar ausgebildet sein. Der Filter kann auch um seine Mittel-Längs-Achse torsionsweich ausgebildet sein. Der Filter kann um wenigstens eine quer zu der Hauptabmessung verlaufende Achse biegeweich ausgebildet sein. Vorzugsweise ist der Filter einrollbar ausgebildet. Der Filter kann mindestens zwei reversibel aneinander anbringbare Filtersegmente aufweisen. Vorzugsweise sind die mindestens zwei Filtersegmente gelenkig aneinander angebracht und/oder zueinander verlagerbar, insbesondere mit einem Band und/oder einer Schnur, verbunden. Die segmentierte Ausbildung des Filters gewährleistet die einfache und störungsfreie Entnahme des Filters aus dem Filtersitz der Dunstabzugsvorrichtung.

Der Filter kann biegeweich ausgebildet sein. Der Filter kann einen flexiblen, insbesondere biegeweichen, Filterrahmen aufweisen. Der Filterrahmen ist vorzugsweise in einer neutralen Faser des Filters angeordnet. Durch die Anordnung des Filterrahmens in der neutralen Faser des Filters ändert sich die Länge des Filterrahmens aufgrund der Verformung des Filters im Wesentlichen nicht. Der Filterrahmen kann dabei biegeweich ausgebildet sein.

Alternativ ist der Filter torsionsweich und/oder dehnbar ausgebildet. Der Filterrahmen kann dabei in der neutralen Faser oder im Bereich einer kleinsten konvexen Hüllfläche des Filters oder dazwischen angeordnet sein.

Der Filter kann mindestens eine Faltung aufweisen. Vorzugsweise ist der Filter plissiert. Der Filter kann hierdurch verformbar ausgebildet sein. Die Faltung kann auch zu einer Erhöhung der Oberfläche des Filters führen. Die Effektivität des Filters kann hierdurch verbessert werden.

Vorzugsweise ist der Filter zwischen einer ersten und einer zweiten Filterform verlagerbar. In der ersten Filterform kann eine Hauptabmessung des Filters größer sein als in der zweiten Filterform. Vorzugsweise beträgt ein Verhältnis zwischen den Hauptabmessungen des Filters in der ersten und der zweiten Filterform mindestens 1,2, insbesondere mindestens 1,5, insbesondere mindestens 2, insbesondere mindestens 3, insbesondere mindestens 4.

Der Filter kann auch um eine Achse quer zu seiner Längsachse biegeweich ausgebildet sein. Vorzugsweise ist der Filter um diese Achse um mindestens 10°, insbesondere mindestens 20°, insbesondere mindestens 30°, insbesondere mindestens 45°, insbesondere mindestens 60° biegbar.

Gemäß einem Aspekt der Erfindung weist der mindestens eine Filter ein Betätigungsmittel auf. Das Betätigungsmittel kann als Griff zur manuellen, insbesondere zur händischen, Entnahme aus der Dunstabzugsvorrichtung ausgebildet sein. Das Betätigungsmittel kann auch als Band oder als Schnur ausgebildet sein. Hierdurch wird die reversible Entnahme des Filters erleichtert.

Vorzugsweise ist die Hauptabmessung des Filters größer ist als die Hauptabmessung der Einströmöffnung. Vorzugsweise beträgt das Verhältnis zwischen der Hauptabmessung des Filters und der Hauptabmessung der Einströmöffnung mindestens 1, insbesondere mindestens 1,2, insbesondere mindestens 1,5, insbesondere mindestens 2, insbesondere mindestens 3, insbesondere mindestens 4. Der Strömungsquerschnitt des Filters kann größer sein als die Einströmfläche.

Eine weitere Aufgabe der Erfindung besteht darin, ein Kochfeldsystem zu verbessern.

Diese Aufgabe wird durch ein Kochfeldsystem mit mindestens einer Dunstabzugsvorrichtung gemäß der vorhergehenden Beschreibung sowie mindestens einem Kochfeld zum Erwärmen von Kochgut gelöst. Die Vorteile ergeben sich aus denen der Dunstabzugsvorrichtung.

Vorzugsweise weist das Kochfeld mindestens eine, insbesondere mindestens zwei, insbesondere mindestens drei, insbesondere mindestens vier, insbesondere mindestens sechs, Kochstellen auf. Die mindestens eine Kochstelle kann als Wärmestrahlungs-Kochstelle und/oder als Induktions-Kochstelle und/oder als Gas-Kochstelle und/oder als Elektro-Masse-Kochstelle ausgebildet sein. Das Kochfeld umfasst mindestens eine Kochstellenplatte und/oder einen Energieüberträger je Kochstelle.

Die mindestens eine Kochstellenplatte kann als Topfträger und/oder Kochgutträger ausgebildet sein. Vorzugsweise ist die mindestens eine Kochstellenplatte des Kochfeldes als Glas-Keramik-Platte ausgebildet. Vorzugsweise ist die Einströmöffnung auf Höhe der Kochstellenplatte angeordnet. Alternativ kann die Einströmöffnung auch oberhalb der Kochstellenplatte angeordnet sein.

Gemäß einem Aspekt der Erfindung ist die Einströmöffnung, in einer Draufsicht, vollständig von der Kochstellenplatte umgeben. Vorzugsweise überdeckt die Einströmöffnung, in einer Draufsicht, einen geometrischen Flächenschwerpunkt der Kochstellenplatte. Vorzugsweise fällt der geometrische Flächenschwerpunkt der Einströmöffnung mit dem geometrischen Flächenschwerpunkt der Kochstellenplatte zusammen.

Gemäß einem weiteren Aspekt der Erfindung ist das Kochfeldsystem als Montageeinheit ausgebildet. Hierunter ist zu verstehen, dass das Kochfeldsystem werkseitig vollständig vormontiert ist. Die Dunstabzugsvorrichtung und die Kochfelder sind insbesondere in ein einziges Gerät integriert. Die Montage des Kochfeldes, insbesondere das Einsetzen des Kochfeldes in eine Aussparung einer Küchenarbeitsplatte, kann somit besonders einfach, schnell und kostengünstig erfolgen. Das derartige Kochfeldsystem wird auch als Kombinationsgerät bezeichnet.

Alternativ kann das Kochfeldsystem als Bausatz vorliegen. Der Bausatz kann derart ausgebildet sein, dass dieser vor dem Einbau in die Aussparung der Küchenarbeitsplatte zumindest teilweise zusammenbaubar ist und/oder dass eine abschließende Montage in der Aussparung erfolgt.

Vorzugsweise ist eine Gesamtbauhöhe der Montageeinheit geringer als 250 mm, insbesondere geringer als 220 mm, insbesondere geringer als 200 mm, insbesondere geringer als 175 mm, insbesondere geringer als 150 mm. Zur Bestimmung der Gesamtbauhöhe sind vorzugsweise lediglich das mindestens eine Kochfeld, der Unterdruck-Kanalabschnitt und der mindestens einen Lüfter zu berücksichtigen.

Weitere Merkmale, Vorteile und Einzelheiten der Erfindung ergeben sich aus der nachfolgenden Beschreibung der Dunstabzugsvorrichtung und des Kochfeldsystems anhand der Figuren. Es zeigen:
- Fig. 1: eine Draufsicht eines Kochfeldsystems mit einem Kochfeld und einer Dunstabzugsvorrichtung,
- Fig. 2: eine perspektivische Darstellung der Dunstabzugsvorrichtung in Fig. 1, wobei ein erster Filter und ein zweiter Filter an einem Filtersitz angeordnet sind,
- Fig. 3: eine perspektivische Darstellung der Dunstabzugsvorrichtung in Fig. 1, wobei der erste Filter in einem Filterwechselraum zwischen dem Filtersitz und einer Einströmöffnung angeordnet ist,
- Fig. 4: eine perspektivische Darstellung der Dunstabzugsvorrichtung in Fig. 1, wobei der erste Filter in dem Filterwechselraum angeordnet ist und von der Einströmöffnung in einer Draufsicht vollständig überdeckt ist,
- Fig. 5: eine schematische Darstellung eines Kochfeldsystems gemäß einem weiteren Ausführungsbeispiel, wonach der Filterwechselraum einen Transportkanal zum Verlagern eines Filters zwischen dem Filtersitz und der Einströmöffnung aufweist, wobei der Filter an dem Filtersitz angeordnet ist,
- Fig. 6: eine schematische Darstellung des Kochfeldsystems in Fig. 5, wobei der Filter die Einströmöffnung durchdringt und teilweise in den Filterwechselraum hineinragt,
- Fig. 7: eine schematische Darstellung einer Abzugsvorrichtung gemäß einem weiteren Ausführungsbeispiel, wonach der Filterwechselraum einen Transportkanal umfasst, der sich zwischen dem Filtersitz und einem stromaufwärts eines Lüfters angeordneten Unterdruck-Kanalabschnitt erstreckt, wobei der Filter an dem Filtersitz angeordnet ist,
- Fig. 8: eine schematische Darstellung der Abzugsvorrichtung in Fig. 7, wobei der Filter in dem Filterwechselraum angeordnet ist und teilweise in den Transportkanal hineinragt,
- Fig. 9: eine schematische Darstellung eines Kochfeldsystems gemäß einem weiteren Ausführungsbeispiel, wonach ein Lüfter ein abnehmbares Lüfterrad umfasst, wobei der Filterwechselraum durch einen Strömungskanal der Dunstabzugsvorrichtung ausgebildet ist und wobei der Filter an dem Filtersitz angeordnet ist und
- Fig. 10: eine schematische Darstellung einer Dunstabzugsvorrichtung gemäß einem alternativen Ausführungsbeispiel, wonach der Filter in einer gebogenen Form an dem Filtersitz angeordnet ist.

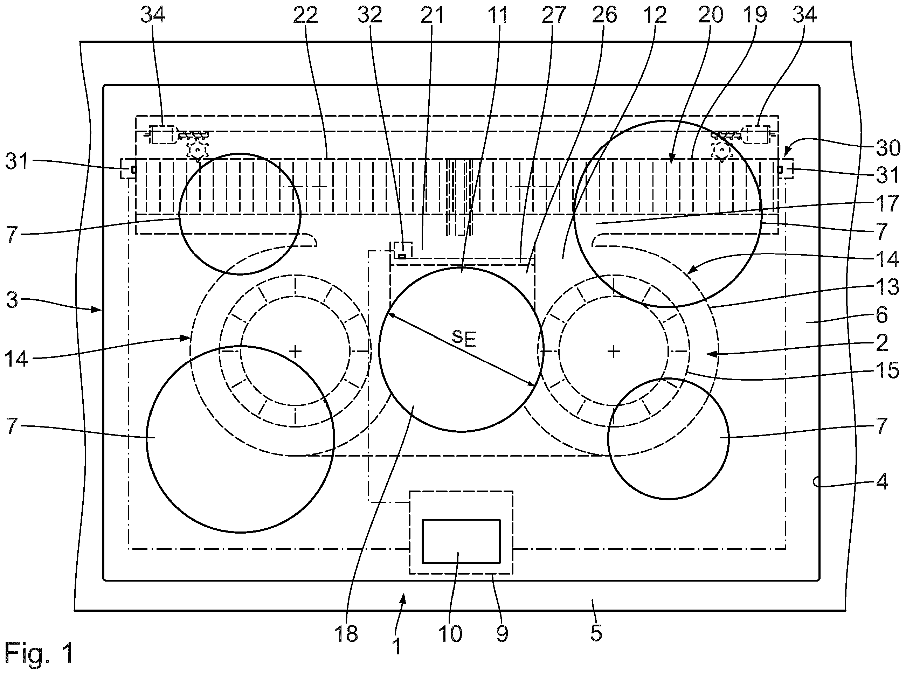

Im Folgenden werden unterschiedliche Details eines Kochfeldsystems 1 und einer Dunstabzugsvorrichtung 2 anhand der Fig. 1 bis Fig. 4 beschrieben.

In Fig. 1 ist ein Kochfeldsystem 1 mit einer Dunstabzugsvorrichtung 2 zum Abzug von Kochdünsten und einem Kochfeld 3 zum Erwärmen von Kochgut dargestellt. Das Kochfeldsystem 1 ist als Montageeinheit ausgebildet und werkseitig vollständig vormontiert. Das Kochfeldsystem ist in eine Aussparung 4 einer Küchenarbeitsplatte 5 eingesetzt.

Das Kochfeld 3 weist eine Kochstellenplatte 6 auf. An der Kochstellenplatte 6 sind vier Kochstellen 7 angeordnet. Die Kochstellen 7 weisen eine nicht dargestellte Beheizungselektronik auf. Die Beheizungselektronik ist von einem Kochfeld-Gehäuse 8 umgeben.

Das Kochfeldsystem weist eine Steuereinheit 9 auf. Die Steuereinheit 9 steht mit einer Benutzerschnittstelle 10 in Signalverbindung. Die Benutzerschnittstelle 10 ist an der Kochstellenplatte 6 angebracht. Die Kochstellenplatte 6 ist als Glas-Keramik-Platte ausgebildet und die Benutzerschnittstelle 10 ist als berührungsempfindlicher Bildschirm ausgeführt.

Das Kochfeldsystem 1 weist eine Bauhöhe von 200 mm auf. Das Kochfeldsystem 1 ist somit als kompakte Montageeinheit ausgebildet.

Die Dunstabzugsvorrichtung 2 umfasst eine Einströmöffnung 11. Die Einströmöffnung 11 durchdringt die Kochstellenplatte 6. Die Einströmöffnung 11 ist in einer Draufsicht in einem Flächenschwerpunkt der Kochstellenplatte 6 angeordnet.

Die Dunstabzugsvorrichtung 2 weist einen an die Einströmöffnung 11 angeschlossenen Strömungskanal 12 auf. Ein Bestandteil des Strömungskanals 12 sind zwei Lüfter-Gehäuse 13. Die beiden Lüfter-Gehäuse 13 sind jeweils auch Bestandteil eines Lüfters 14. Der jeweilige Lüfter 14 weist ein Lüfterrad 15 und einen Lüfter-Motor 16 auf.

Die Dunstabzugsvorrichtung ist dazu ausgebildet, Kochdünste durch die Einströmöffnung 11 entlang des Strömungskanals 12 und durch die beiden Lüfter 14 zu fördern. Der Strömungskanal 12 umfasst einen stromabwärts der Lüfter 14 angeordneten Überdruck-Kanalabschnitt 17 und einen stromaufwärts der Lüfter 14 und stromabwärts der Einströmöffnung 11 angeordneten Unterdruck-Kanalabschnitt 18.

In dem Überdruck-Kanalabschnitt 17 ist ein Filtersitz 19 angeordnet. An dem Filtersitz 19 sind zwei Filter 20 zum Filtern der Kochdünste angeordnet. Die beiden Filter 20 sind als Geruchsfilter ausgebildet.

Zwischen der Einströmöffnung 11 und dem Filtersitz 19 ist ein Filterwechselraum 21 angeordnet. Der Filterwechselraum 21 ist derart ausgebildet, dass der Filter 20 durch die Einströmöffnung 11 reversibel entnehmbar ist. Der Filterwechselraum 21 weist hierzu einen inneren, freien Querschnitt auf, in dem der jeweilige Filter 20 zwischen dem Filtersitz 19 und durch die Einströmöffnung 11 verlagerbar ist. Der Filtersitz 19 weist eine nicht dargestellte Strömungsöffnung 22 auf. Die Strömungsöffnung 22 wird von den Kochdünsten vollständig durchströmt. In der Anordnung des Filters 20 an dem Filtersitz 19 überdecken die beiden Filter 20 die Strömungsöffnung 22 gänzlich. Die Filter 20 sind dabei derart in dem Strömungskanal 12 angeordnet, dass der Kochdunststrom vollständig durch diese hindurchströmt.

Der Filtersitz 19 weist ein Dichtmittel 23 auf. Das Dichtmittel 23 ist als Dichtlippe ausgebildet. Das Dichtmittel 23 ist aus einem gummielastischen Material hergestellt. Das Dichtmittel 23 umläuft die Strömungsöffnung 22 vollständig. Der Filter 20 weist eine Dichtfläche 24 auf. Die Dichtfläche 24 bildet zusammen mit dem Dichtmittel 23 eine fluiddichte Verbindung aus. Alternativ kann der Filter 20 das Dichtmittel 23 aufweisen und der Filtersitz 19 kann mit einer Dichtfläche 24 ausgebildet sein. In der Anordnung des Filters 20 an dem Filtersitz 19 ist der Filter 20 fluiddicht mit dem Filtersitz 19 verbunden. Die beiden zwischen den Lüftern 14 und der Strömungsöffnung 22 angeordneten Filter 20 sind von Kochdünsten durchströmbar ausgebildet.

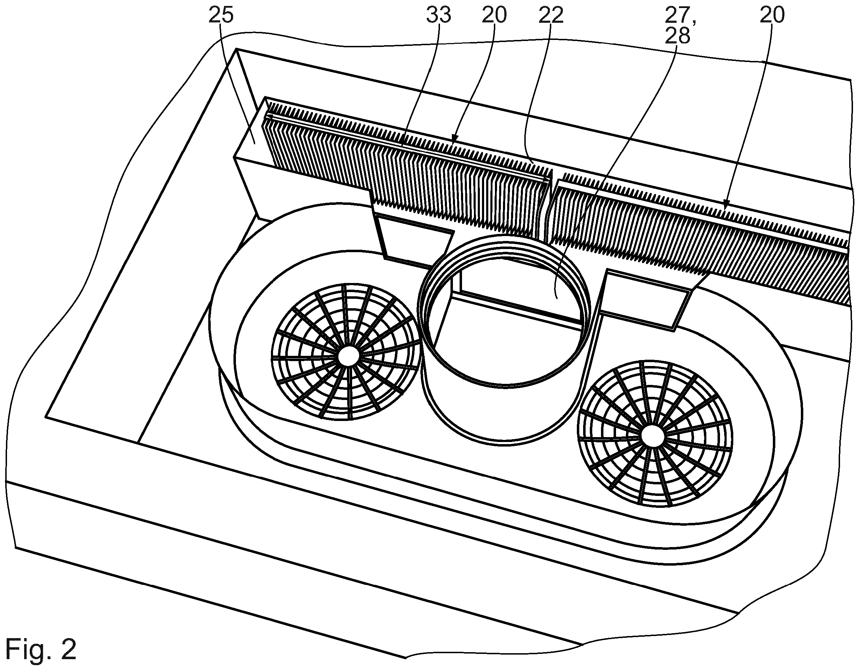

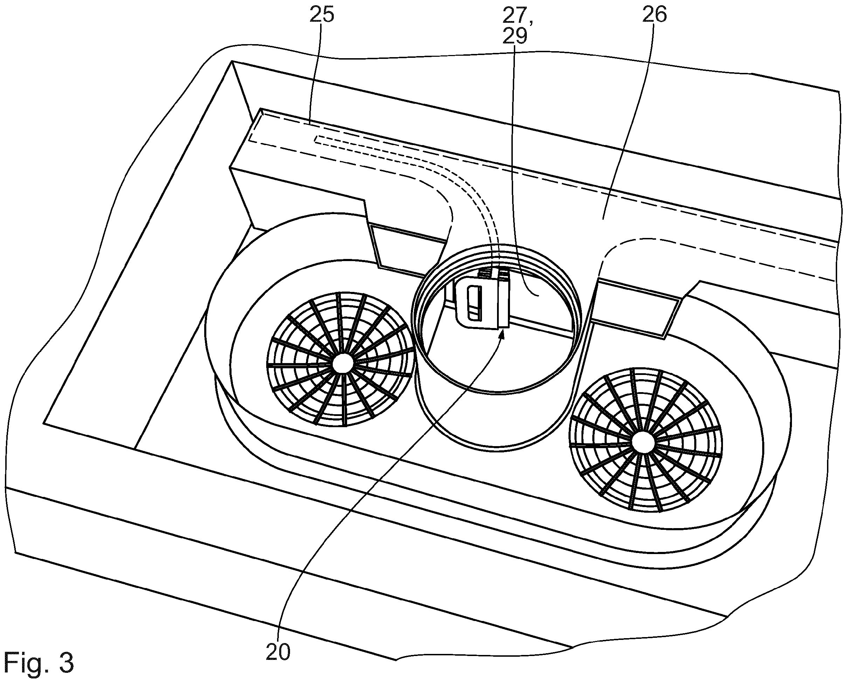

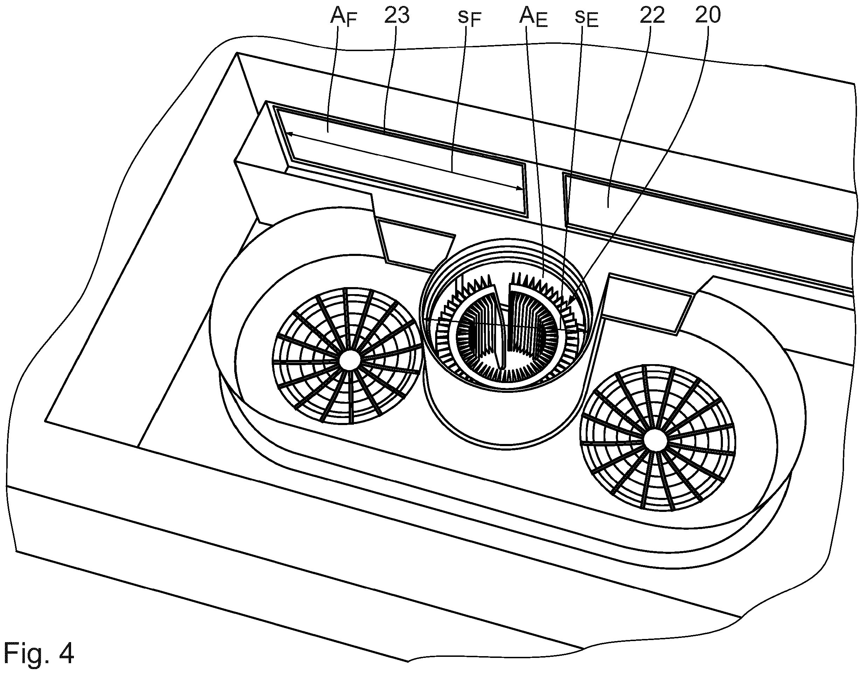

In Fig. 1 und Fig. 2 sind die beiden Filter 20 in ihrer Anordnung an dem Filtersitz 19 dargestellt. In den Fig. 3 und Fig. 4 ist ein erster Filter 20 in dem Filterwechselraum 21 zwischen dem Filtersitz 19 und der Einströmöffnung 11 angeordnet. Ein zweiter Filter 20 ist bereits aus der Dunstabzugsvorrichtung 2 entnommen und nicht dargestellt.

Der Filterwechselraum 21 weist eine Führungseinrichtung 25 zum geführten Verlagern der beiden Filter 20 auf. Die Führungseinrichtung 25 wird durch die Wandungen des Filtersitzes 19 gebildet. Beim Einbringen der Filter 20 in den Filtersitz 19 werden diese zwischen einer oberen und einer unteren Wandung, sowie von einer die Strömungsöffnung 22 aufweisenden rückseitigen Wandung des Filtersitzes 19 geführt.

Der Filterwechselraum 21 umfasst einen Transportkanal 26. Der Transportkanal 26 erstreckt sich zwischen dem Unterdruck-Kanalabschnitt 18 und dem Überdruck-Kanalabschnitt 17. Durch den Transportkanal 26 ist der jeweilige Filter 20 zwischen dem Filtersitz 19 und der Einströmöffnung 11 verlagerbar. Der Filterwechselraum 21 weist eine Verschlussklappe 27 auf. Die Verschlussklappe 27 ist dazu ausgebildet, den Filterwechselraum 21 gegen ein Durchströmen mit Kochdünsten fluiddicht zu verschließen. Die Verschlussklappe 27 ist gelenkig an dem Strömungskanal 12 gelagert. Die Verschlussklappe 27 ist zwischen einer Verschlussstellung 28, in welcher der Filterwechselraum 21 fluiddicht verschlossen ist, und einer Offenstellung 29, in welcher der Filterwechselraum zum reversiblen Entnehmen der beiden Filter 20 geöffnet ist, verlagerbar. Die Verschlussklappe 27 ist in Richtung des Unterdruck-Kanalabschnitts 18 öffenbar. Alternativ kann die Verschlussklappe 27 auch in Richtung des Überdruck-Kanalabschnitts 17 öffenbar sein.

Die Steuereinheit 9 ist zum Betrieb des Kochfelds 3 und der Dunstabzugsvorrichtung 2, insbesondere der beiden Lüfter 14, ausgebildet. Die Dunstabzugsvorrichtung 2 weist eine Sensoreinrichtung 30 auf. Die Sensoreinrichtung 30 umfasst einen Filter-Sensor 31 zum Erfassen der Anordnung der beiden Filter 20 an dem Filtersitz 19. Die Sensoreinrichtung 30 steht in Signalverbindung mit der Steuereinheit 9. Die Steuereinheit 9 ist zum Unterbrechen des Betriebs des Lüfters 14 anhand eines Signals der Sensoreinrichtung 30 ausgebildet. Die Sensoreinrichtung 30 ist derart ausgeführt, dass ein Signal zum Unterbrechen des Betriebs des Lüfters 14 bereitgestellt wird, sofern der Filter-Sensor 31 eine fehlende und/oder falsche Anordnung der beiden Filter 20 an dem Filtersitz 19 erfasst.

Die Sensoreinrichtung 30 weist einen Verschlussklappen-Sensor 32 zum Erfassen einer Anordnung der Verschlussklappe 27 auf. Die Sensoreinrichtung 30 ist dazu ausgebildet, ein Signal zum Unterbrechen des Betriebs des Lüfters 14 bereitzustellen, sofern der Verschlussklappen-Sensor 32 eine Anordnung der Verschlussklappe 27 außerhalb der Verschlussstellung 28 erfasst.

Die Strömungsöffnung 22 weist eine Hauptabmessung s_{F} auf, Die Hauptabmessung s_{F} ist größer als eine Hauptabmessung s_{E} der Einströmöffnung 11. Eine Öffnungsfläche A_{F} der Strömungsöffnung 22 ist größer als eine Einströmfläche A_{E} der Einströmöffnung 11.

Die beiden Filter 20 sind verformbar ausgebildet. Die beiden Filter 20 weisen je eine Haupterstreckung 33 auf. Die beiden Filter 20 sind einteilig ausgebildet und in Richtung der Haupterstreckung 33 dehnsteif. Um eine senkrecht zu der Haupterstreckung 33 orientierte Achse sind die beiden Filter 20 biegeweich ausgebildet. Zum reversiblen Entnehmen ist der jeweilige Filter 20 um eine vertikale Achse biegbar ausgebildet.

Die Dunstabzugsvorrichtung 2 weist eine Antriebseinrichtung 34 zum automatisierten Verlagern der beiden Filter 20 in dem Filterwechselraum 21 auf. Die Antriebseinrichtung 34 ist dazu ausgebildet, den jeweiligen Filter 20 entlang der Führungseinrichtung 25 an den Filtersitz 19 bzw. von dem Filtersitz 19 in Richtung der Einströmöffnung 11 zu verlagern. Die Antriebseinrichtung 34 steht zum korrekten Positionieren des jeweiligen Filters 20 in Signalverbindung mit dem Filter-Sensor 31.

Die Funktionsweise des Kochfeldsystems 1 ist wie folgt:
Das Kochfeldsystem 1 ist über die Steuereinheit 9 steuerbar. Benutzereingaben werden von der Benutzerschnittstelle 10 an die Steuereinheit 9 weitergegeben. Die Steuereinheit 9 steht in Signalverbindung mit den Kochstellen 7 und den Lüfter-Motoren 16. Die Steuereinheit 9 erlaubt das Einstellen der den Kochstellen 7 und den Lüfter-Motoren 16 zugeführten Leistung.

Bei Versorgung der Lüfter-Motoren 16 mit elektrischer Leistung wird ein Drehmoment auf die Lüfterräder 15 übertragen. Die rotierenden Lüfterräder 15 erzeugen einen gegenüber einem Umgebungsdruck niedrigeren Unterdruck in dem Unterdruck-Kanalabschnitt 18 und einen gegenüber dem Umgebungsdruck höheren Überdruck in dem Überdruck-Kanalabschnitt 17.

Durch Erwärmen des Kochguts durch Zufuhr von Leistung zu den Kochstellen 7 entstehen oberhalb der Kochstellenplatte 6 Kochdünste. Durch den in dem Unterdruck-Kanalabschnitt 17 herrschenden Unterdruck werden die Kochdünste durch die Einströmöffnung 11 entlang des Strömungskanals 12 zu den Lüftern 14 gesaugt und in dem Überdruck-Kanalabschnitt 17 durch die Filter 20 und die Strömungsöffnung 22 hindurch aus der Dunstabzugsvorrichtung 2 abgeführt.

In Fig. 1 und Fig. 2 sind die Filter 20 an dem Filtersitz 19 angeordnet dargestellt. Die Filter-Sensoren 31 erfassen die Anordnung der Filter 20 an dem Filtersitz 19. Die Verschlussklappe 27 befindet sich in der Verschlussstellung 28. Der Verschlussklappen-Sensor 32 erfasst die Anordnung der Verschlussklappe 27 in der Verschlussstellung 28. Der Betrieb der beiden Lüfter 14 und deren Versorgung mit elektrischer Leistung sind damit freigegeben.

In Fig. 3 und Fig. 4 ist die Verschlussklappe 27 in der Offenstellung 29 angeordnet. Der erste Filter 20 ist entlang des Filterwechselraums 21 in Richtung der Einströmöffnung 11 verlagert und der zweite Filter 20 ist bereits aus der Dunstabzugsvorrichtung 2 entfernt. Der Filter-Sensor 31 erfasst die Verlagerung des jeweiligen Filters 20 aus dem Filtersitz 19. Der Verschlussklappen-Sensor 32 erfasst die Anordnung der Verschlussklappe 27 in der Offenstellung 29. Die Steuereinheit 9 erfasst ein Signal der Sensoreinrichtung 32 zum Unterbrechen des Betriebs der beiden Lüfter 14. Der Betrieb der beiden Lüfter-Motoren 16 ist unterbrochen.

Die Entnahme der beiden Filter 20 aus dem Filtersitz 19 sowie das Einsetzen in den Filtersitz 19 erfolgt teilweise automatisiert. Zur automatisierten Verlagerung des jeweiligen Filters 20 steht die Antriebseinrichtung 24 in Eingriff mit dem jeweiligen Filter 20. Durch Betätigen der Antriebseinrichtung 34 wird der jeweilige Filter 20 entlang der Führungseinrichtung 25 verlagert.

Zur Entnahme des jeweiligen Filters 20 durch den Filterwechselraum 21 und die Einströmöffnung 11 wird dieser um eine vertikale Achse gekrümmt, insbesondere eingerollt. In der gekrümmten Form ist der Filter 20 durch die Einströmöffnung 11 aus der Dunstabzugsvorrichtung entnehmbar.

Zum Einsetzen des jeweiligen Filters 20 in den Filtersitz 19 wird der jeweilige Filter 20 zunächst verformt, insbesondere um die vertikale Achse gekrümmt, anschließend durch die Einströmöffnung 11 in den Unterdruck-Kanalabschnitt 18 eingebracht und entlang des Filterwechselraums 21 durch den Transportkanal 26 hindurch und von der Führungseinrichtung 25 geführt an den Filtersitz 19 verlagert. Die Verlagerung des jeweiligen Filters 20 erfolgt teilweise automatisiert durch Betätigung der Antriebseinrichtung 34. Die Filter-Sensoren 31 erfassen die Anordnung des jeweiligen Filters 20 an dem Filtersitz 19. Die Verschlussklappe 27 wird in die Verschlussstellung 28 verlagert und der Verschlussklappen-Sensor 32 erfasst die Anordnung der Verschlussklappe 27 in der Verschlussstellung 28. Das Signal zum Unterbrechen des Betriebs der beiden Lüfter 14 wird aufgehoben und der Betrieb der beiden Lüfter 14 kann wieder aufgenommen werden.

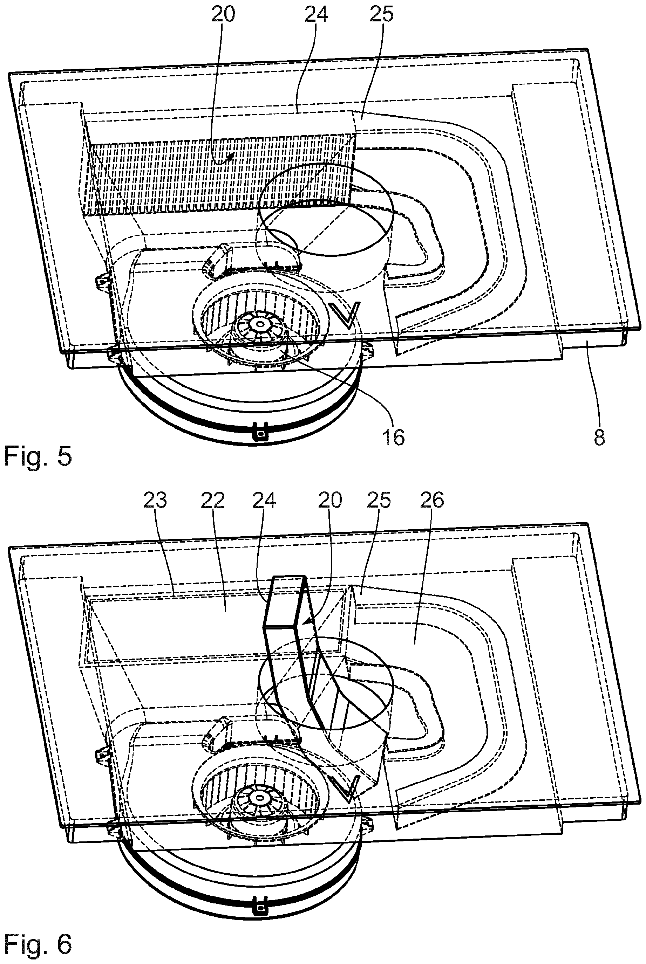

Anhand der Fig. 5 und Fig. 6 ist ein weiteres Ausführungsbeispiel der Erfindung beschrieben. Im Unterschied zu dem vorangegangenen Ausführungsbeispiel weist die Dunstabzugsvorrichtung 2 lediglich einen Lüfter 14 auf. An dem Filtersitz 19 ist ein einzelner Filter 20 anordenbar. Die Verlagerung des Filters 20 innerhalb des Filterwechselraums 21 erfolgt vollständig manuell, insbesondere händisch. Der Filterwechselraum 21 weist einen Transportkanal 26 auf. Die Wandung des Transportkanals 26 ist zum Führen des Filters 20 ausgebildet und Teil der Führungseinrichtung 25. Der Transportkanal 26 erstreckt sich zwischen dem Unterdruck-Kanalabschnitt 18 und dem Überdruck-Kanalabschnitt 17. Seitens des Überdruck-Kanalabschnitts 18 ist der Filterwechselraum 21 mittels der Verschlussklappe 27 reversibel verschließbar.

Zur Entnahme des Filters 20 aus dem Filtersitz 19 wird dieser entlang des Transportkanals 26 verlagert. Der Filter 20 wird dabei um mehrere Achsen quer zu der Haupterstreckung 33 gebogen. Der Filter 20 wird entlang seiner Haupterstreckung 33 aus der Einströmöffnung 11 entnommen.

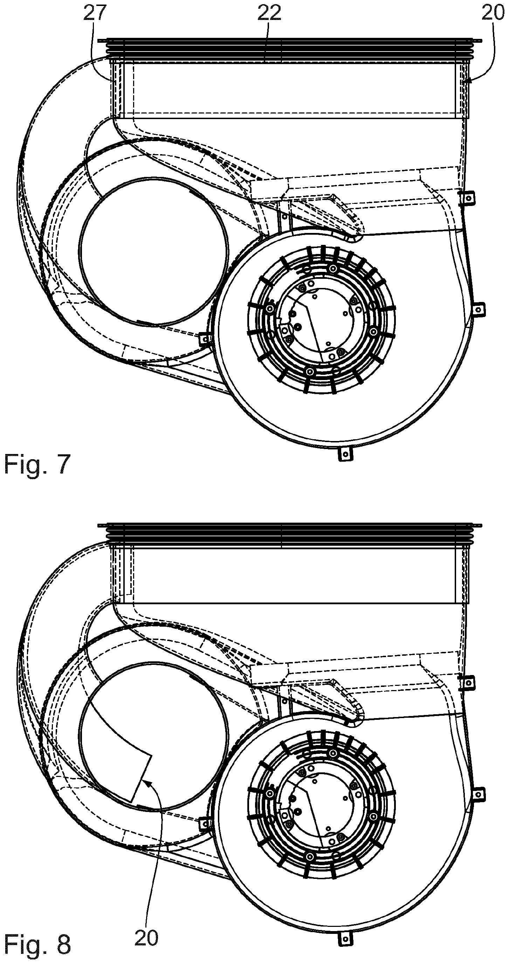

Anhand der Fig. 7 und Fig. 8 ist ein weiteres Ausführungsbeispiel der Erfindung beschrieben. Im Unterschied zu den vorangegangenen Ausführungsbeispielen weist die Dunstabzugsvorrichtung 2 einen Lüfter 14 und einen an dem Filtersitz 19 anordenbaren Filter 20 auf, wobei der Transportkanal 26 einfach gekrümmt ausgebildet ist. Die Verschlussklappe 27 ist seitens des Überdruck-Kanalabschnitts 17 des Transportkanals 26 angeordnet. Die Verschlussklappe 27 ist durch die Antriebseinrichtung 34 betätigbar. Die Antriebseinrichtung 34 ist zur Verlagerung des Filters 20 entlang des Filterwechselraums 21 ausgebildet. Die Strömungsöffnung 22 ist eben ausgeführt.

Zur Entnahme des Filters 20 aus der Dunstabzugsvorrichtung 2 wird über die Benutzerschnittstelle 10 ein Programm zur Entnahme des Filters 20 in der Steuereinheit 9 aktiviert. Gesteuert von der Steuereinheit 9 wird mittels der Antriebseinrichtung 34 die Verschlussklappe 27 von der Verschlussstellung 28 in die Offenstellung 29 verlagert. Mittels der Antriebseinrichtung 34 wird anschließend der Filter 20 entlang des Transportkanals 26 durch den Filterwechselraum 21 in den Unterdruck-Kanalabschnitt 18 verlagert. Der Filter 20 kann anschließend von Hand aus der Einströmöffnung 11 entnommen werden.

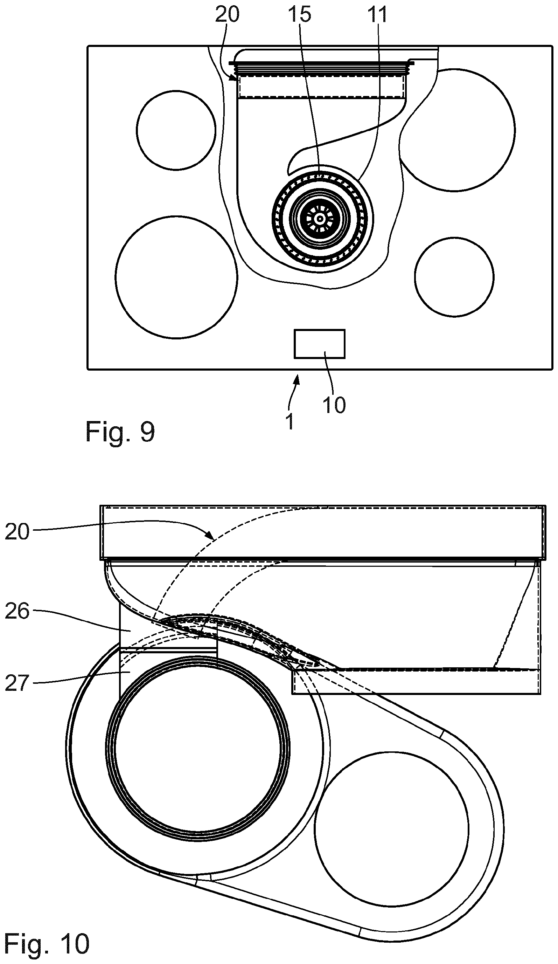

Anhand der Fig. 9 ist ein weiteres Ausführungsbeispiel der Erfindung beschrieben. Im Unterschied zu den vorangegangenen Ausführungsbeispielen ist das Lüfterrad 15 des Lüfters 14 mittig unter der Einströmöffnung 11 angeordnet. Das Lüfterrad 15 ist derart dimensioniert, dass es aus der Einströmöffnung 11 entnehmbar ist. Der Filterwechselraum 21 wird durch den Strömungskanal 12 ausgebildet.

Zur Entnahme des Filters 20 aus dem Filtersitz 19 wird zunächst das Lüfterrad 15 aus dem Strömungskanal 12 durch die Einströmöffnung 11 entnommen. Hierdurch wird der durch den Strömungskanal 12 ausgebildete Filterwechselraum 21 soweit freigegeben, dass der Filter 20 aus dem Filtersitz 19 durch die Einströmöffnung 11 entnommen werden kann. Die Dunstabzugsvorrichtung 2 gemäß dieses Ausführungsbeispiels weist keinen Transportkanal 26 auf und eine Verschlussklappe 27 ist nicht notwendig. Die dem Ausführungsbeispiel gemäß Fig. 9 zugrundeliegenden Merkmale sind beliebig mit denen der vorangegangenen Ausführungsbeispiele kombinierbar.

Anhand der Fig. 10 ist ein weiteres Ausführungsbeispiel der Erfindung beschrieben. Im Unterschied zu den vorangegangenen Ausführungsbeispielen ist die Strömungsöffnung 22 gekrümmt ausgebildet. Der Filter 20 ist an dem Filtersitz 19 in einer gekrümmten Form angeordnet. Der Filterwechselraum 21 umfasst den Transportkanal 26 und ist mittels der Verschlussklappe 27 gegen ein Durchströmen mit Kochdünsten verschließbar.

Das Entnehmen des Filters 20 aus dem Filtersitz 19 und das Einsetzen des Filters 20 in den Filtersitz 19 erfolgt wie anhand der vorstehend erläuterten Ausführungsformen bereits beschrieben.

Gemäß einer weiteren, nicht dargestellten Ausführungsform ist in dem Filterwechselraum 21 eine Führungseinrichtung 25 in Form einer Kulissenführung angeordnet. Zur Ausbildung der Kulissenführung weist der Filterwechselraum 21 eine Nut auf, in der ein Rahmen des Filters 20 zumindest abschnittsweise linear verschiebbar gelagert ist. Der Filtersitz ist eben ausgebildet.

Zur Entnahme des Filters 20 wird dieser entlang der Kulissenführung verschoben, wobei zunächst ein zu der Einströmöffnung 11 weisendes Ende des Filters 20 gekrümmt wird. Der Filter 20 befindet sich hiernach in der in Fig. 10 dargestellten Position. Der Filter 20 wird entlang der Kulissenführung weiter in Richtung der Einströmöffnung 11 verlagert. Zur Entnahme des Filters 20 aus der Dunstabzugsvorrichtung 2 sind die anhand der vorstehend erläuterten Ausführungsformen bereits beschriebenen Schritte durchzuführen.

## Patentansprüche

1. Dunstabzugsvorrichtung (2) zum Abzug von Kochdünsten nach unten, aufweisend
- mindestens einen Lüfter (14) zum Ansaugen der Kochdünste,
- eine Einströmöffnung (11) zum Eintritt der Kochdünste in die Dunstabzugsvorrichtung (2),
- einen Strömungskanal (12) zum Führen der Kochdünste, mit einem stromaufwärts des mindestens einen Lüfters (14) angeordneten Unterdruck-Kanalabschnitt (18)
**gekennzeichnet durch**,
- einen stromabwärts des mindestens einen Lüfters (14) angeordneten Filtersitz (19), an dem mindestens ein Filter (20) zum Filtern der Kochdünste anordenbar ist, und
- einen sich zwischen der Einströmöffnung (11) und dem mindestens einen Filtersitz (19) erstreckenden Filterwechselraum (21),
- wobei der Filterwechselraum (21) derart ausgebildet ist, dass der mindestens eine Filter (20) aus dem Filtersitz (19) durch die Einströmöffnung (11) reversibel entnehmbar ist, und
- wobei eine Bauhöhe der Dunstabzugsvorrichtung (2) zwischen der Einströmöffnung (11) und einer Unterseite des Unterdruck-Kanalabschnitts (18) und/oder einer Unterseite des mindestens einen Lüfters (14) höchstens 250 mm beträgt.

2. Dunstabzugsvorrichtung (2) nach Anspruch 1,
**dadurch gekennzeichnet, dass** in dem Filterwechselraum (21) eine Führungseinrichtung (25) zum geführten Verlagern des mindestens einen Filters (20) angeordnet ist.

3. Dunstabzugsvorrichtung (2) nach Anspruch 1 oder 2,
**dadurch gekennzeichnet, dass** der Filtersitz (19) ein Dichtmittel (23) und/oder eine Dichtfläche (26) zum fluiddichten Verbinden mit dem mindestens einen Filter (20) aufweist.

4. Dunstabzugsvorrichtung (2) nach einem der Ansprüche 1 bis 3,
**dadurch gekennzeichnet, dass** in dem Filterwechselraum (21) ein Transportkanal (26) angeordnet ist, durch den hindurch der mindestens eine Filter (20) verlagerbar ist und der sich außerhalb des mindestens einen Lüfters (14), zwischen einem stromaufwärts des mindestens einen Lüfters (14) angeordneten Unterdruck-Kanalabschnitt (18) und dem Filtersitz (19) erstreckt.

5. Dunstabzugsvorrichtung (2) nach einem der Ansprüche 1 bis 4,
**dadurch gekennzeichnet, dass** in dem Filterwechselraum (21) eine Verschlussklappe (27) zum reversiblen Verschließen gegen eine Durchströmung mit den Kochdünsten angeordnet ist.

6. Dunstabzugsvorrichtung (2) nach einem der Ansprüche 1 bis 5,
**gekennzeichnet durch** eine Steuereinheit (9) zum Betrieb des mindestens einen Lüfters (14) mit einer Sensoreinrichtung (30), welche mit der Steuereinheit (9) in Signalverbindung steht, wobei die Steuereinheit (9) zum Unterbrechen des Betriebs des mindestens einen Lüfters (14) anhand eines Signals der Sensoreinrichtung (30) ausgebildet ist.

7. Dunstabzugsvorrichtung (2) nach Anspruch 6,
**dadurch gekennzeichnet, dass** die Sensoreinrichtung (30) einen Filter-Sensor (31) zum Erfassen einer Anordnung des mindestens einen Filters (20) an dem Filtersitz (19) aufweist.

8. Dunstabzugsvorrichtung (2) nach Anspruch 6 oder 7,
**dadurch gekennzeichnet, dass** die Sensoreinrichtung (30) einen Verschlussklappen-Sensor (32) zum Erfassen einer Anordnung der Verschlussklappe (27) aufweist.

9. Dunstabzugsvorrichtung (2) nach einem der Ansprüche 1 bis 8,
**dadurch gekennzeichnet, dass** der Filtersitz (19) eine von dem mindestens einen Filter (20) verdeckbare und von den Kochdünsten durchströmbare Strömungsöffnung (22) aufweist, wobei diese eine Hauptabmessung (s_{F}) aufweist, welche größer ist als eine Hauptabmessung (s_{E}) der Einströmöffnung (11).

10. Dunstabzugsvorrichtung (2) nach einem der Ansprüche 1 bis 9,
**dadurch gekennzeichnet, dass** eine Öffnungsfläche (A_{F}) der Strömungsöffnung (22) größer ist als eine Einströmfläche (A_{E}) der Einströmöffnung (11).

11. Dunstabzugsvorrichtung (2) nach einem der Ansprüche 1 bis 10,
**gekennzeichnet durch** eine Antriebseinrichtung (34) zum zumindest teilweise automatisierten Verlagern des mindestens einen Filters (20) in dem Filterwechselraum (21).

12. Dunstabzugsvorrichtung (2) nach einem der Ansprüche 1 bis 11, mit mindestens einem Filter (20),
- wobei dieser reversibel verformbar ausgebildet ist und
- wobei dieser einen flexiblen Filterrahmen aufweist.

13. Kochfeldsystem (1), aufweisend
- mindestens eine Dunstabzugsvorrichtung (2) nach einem der Ansprüche 1 bis 11 und
- mindestens ein Kochfeld (3) zum Erwärmen von Kochgut.

14. Kochfeldsystem (1) nach Anspruch 13,
**dadurch gekennzeichnet, dass** die Einströmöffnung (11), in einer Draufsicht, vollständig von einer Kochstellenplatte (6) des Kochfelds (3) umgeben ist.

15. Kochfeldsystem (1) nach Anspruch 13 oder 14,
**dadurch gekennzeichnet, dass** es als Kombinationsgerät ausgebildet ist.

## Claims

1. Extractor fan apparatus (2) for extracting cooking vapours downwards, having
- at least one fan (14) for aspirating the cooking vapours,
- an inflow opening (11) for the entry of the cooking vapours into the extractor fan apparatus (2),
- a flow channel for guiding the cooking vapours, with a negative pressure channel section (18) which is arranged upstream of the at least one fan (14),
**characterized by**
- a filter seat (19) which is arranged downstream of the at least one fan (14) and on which at least one filter (20) for filtering the cooking vapours can be arranged, and
- a filter replacement space (21) which extends between the inflow opening (11) and the at least one filter seat (19),- wherein the filter replacement space (21) is configured in such a way that the at least one filter (20) is reversibly removable from the filter seat (19) through the inflow opening (11), and
- wherein an overall height of the extractor fan apparatus (2) between the inflow opening (11) and an underside of the negative pressure channel section (18) and/or an underside of the at least one fan is at most 250 mm.

2. Extractor fan apparatus (2) according to claim 1,
**characterized in that** a guide device (25) for the guided displacement of the at least one filter (20) is arranged in the filter replacement space (21).

3. Extractor fan apparatus (2) according to claim 1 or 2,
**characterized in that** the filter seat (19) has a sealing means (23) and/or a sealing face (26) for the fluid-tight connection to the at least one filter (20).

4. Extractor fan apparatus (2) according to one of claims 1 to 3,
**characterized in that** a transport channel (26) is arranged in the filter replacement space (21), through which transport channel (26) the at least one filter (20) can be moved, and which transport channel (26) extends outside the at least one fan (14), between a negative pressure channel section (18) which is arranged upstream of the at least one fan (14) and the filter seat (19).

5. Extractor fan apparatus (2) according to one of claims 1 to 4,
**characterized in that** a closure flap (27) for reversible closure with respect to a throughflow with the cooking vapours is arranged in the filter replacement space (21).

6. Extractor fan apparatus (2) according to one of claims 1 to 5,
**characterized by** a control unit (9) for operating the at least one fan (14) with a sensor device (30) which is signal-connected to the control unit (9), wherein the control unit (9) is configured to interrupt the operation of the at least one fan (14) on the basis of a signal of the sensor device (30).

7. Extractor fan apparatus (2) according to claim 6,
**characterized in that** the sensor device (30) has a filter sensor (31) for detecting an arrangement of the at least one filter (20) on the filter seat (19).

8. Extractor fan apparatus (2) according to claim 6 or 7,
**characterized in that** the sensor device (30) has a closure flap sensor (32) for detecting an arrangement of the closure flap (27).

9. Extractor fan apparatus (2) according to one of claims 1 to 8,
**characterized in that** the filter seat (19) has a flow opening (22) which can be covered by the at least one filter (20) and through which the cooking vapours can flow, said flow opening (22) having a main dimension (s_{F}) which is greater than a main dimension (s_{E}) of the inflow opening (11).

10. Extractor fan apparatus (2) according to one of claims 1 to 9,
**characterized in that** an opening area (A_{F}) of the flow opening (22) is greater than an inflow area (A_{E}) of the inflow opening (11).

11. Extractor fan apparatus (2) according to one of claims 1 to 10,
**characterized by** a drive device (34) for the at least partially automated displacement of the at least one filter (20) in the filter replacement space (21).

12. Extractor fan apparatus (2) according to one of claims 1 to 11, having at least one filter (20),
- said filter (20) being of reversibly deformable configuration, and
- said filter (20) having a flexible filter frame.

13. Hob system (1), having
- at least one extractor fan apparatus (2) according to one of claims 1 to 11, and
- at least one hob (3) for heating food to be cooked.

14. Hob system (1) according to claim 13,
**characterized in that** the inflow opening (11) is surrounded completely by a hot plate (6) of the hob (3) in a plan view.

15. Hob system (1) according to claim 13 or 14,
**characterized in that** it is configured as a combination device.

## Revendications

1. Dispositif d'aspiration de vapeur (2) destiné à évacuer des vapeurs de cuisson vers le bas, comportant
- au moins un ventilateur (14) destiné à aspirer les vapeurs de cuisson,
- une ouverture d'entrée (11) destinée à l'entrée des vapeurs de cuisson dans le dispositif d'aspiration de vapeur (2),
- un canal d'écoulement (12) destiné à guider les vapeurs de cuisson, avec une section de canal à pression négative (18) agencée en amont de l'au moins un ventilateur (18),
**caractérisé par**
- un logement de filtre (19) agencé en aval de l'au moins un ventilateur (14), sur lequel au moins un filtre (20) destiné à filtrer les vapeurs de cuisson peut être agencé, et
- un espace de changement de filtre (21) s'étendant entre l'ouverture d'entrée (11) et l'au moins un logement de filtre (19),
- dans lequel l'espace de changement de filtre (21) est conçu de sorte que l'au moins un filtre (20) puisse être retiré réversiblement du logement de filtre (19) au travers de l'ouverture d'entrée, et
- dans lequel une hauteur de construction du dispositif d'aspiration de vapeur (2) entre l'ouverture d'entrée (11) et une face inférieure de la section de canal à pression négative (18) et/ou une face inférieure de l'au moins un ventilateur (14) et d'au plus 250 mm.

2. Dispositif d'aspiration de vapeur (2) selon la revendication 1, **caractérisé en ce que** dans l'espace de changement de filtre (21) un dispositif de guidage (25) destiné au déplacement guidé de l'au moins un filtre (20) est agencé.

3. Dispositif d'aspiration de vapeur (2) selon la revendication 1 ou 2, **caractérisé en ce que** le logement de filtre (19) présente un moyen d'étanchéité (23) et/ou une surface d'étanchéité (26) destinée à être reliée de manière étanche aux fluides avec l'au moins un filtre (20).

4. Dispositif d'aspiration de vapeur (2) selon l'une quelconque des revendications 1 à 3, **caractérisé en ce que** dans l'espace de changement de filtre (21) un canal de transport (26) est agencé au travers duquel l'au moins un filtre (20) peut être déplacé et qui s'étend à l'extérieur de l'au moins un ventilateur (14), entre une section de canal à pression négative (18) agencée en amont de l'au moins un ventilateur (14) et le logement de filtre (19).

5. Dispositif d'aspiration de vapeur (2) selon l'une quelconque des revendications 1 à 4, **caractérisé en ce que** dans l'espace de changement de filtre (21) un clapet de fermeture (27), destiné à fermer réversiblement contre un passage des vapeurs de cuisson, est agencé.

6. Dispositif d'aspiration de vapeur (2) selon l'une quelconque des revendications 1 à 5, **caractérisé par** une unité de commande (9) destinée à actionner l'au moins un ventilateur (14) avec un dispositif capteur (30) étant en liaison de signalisation avec l'unité de commande (9), dans lequel l'unité de commande (9) est conçue pour interrompre le service de l'au moins un ventilateur (14) par un signal du dispositif capteur (30).

7. Dispositif d'aspiration de vapeur (2) selon la revendication 6, **caractérisé en ce que** le dispositif capteur (30) présente un capteur de filtre (31) destiné à capter un agencement de l'au moins un filtre (20) sur le logement de filtre (19).

8. Dispositif d'aspiration de vapeur (2) selon la revendication 6 ou 7, **caractérisé en ce que** le dispositif capteur (30) présente un capteur de clapet de fermeture (32) destiné à capter un agencement du clapet de fermeture (27).

9. Dispositif d'aspiration de vapeur (2) selon l'une quelconque des revendications 1 à 8, **caractérisé en ce que** le logement de filtre (19) présente une ouverture de passage (22) pouvant être recouverte par l'au moins un filtre (20) et pouvant être passée par les vapeurs de cuisson, dans lequel ladite ouverture de passage présente une dimension principale (s_{F}) qui est supérieure à une dimension principale (s_{E}) de l'ouverture d'entrée (11).

10. Dispositif d'aspiration de vapeur (2) selon l'une quelconque des revendications 1 à 9, **caractérisé en ce qu'**une surface d'ouverture (A_{F}) de l'ouverture de passage (22) est supérieure à une surface d'entrée (A_{E}) de l'ouverture d'entrée (11).

11. Dispositif d'aspiration de vapeur (2) selon l'une quelconque des revendications 1 à 10, **caractérisé par** un dispositif d'entraînement (34) destiné à déplacer de manière au moins partiellement automatisée l'au moins un filtre (20) dans l'espace de changement de filtre (21).

12. Dispositif d'aspiration de vapeur (2) selon l'une quelconque des revendications 1 à 11, avec au moins un filtre (20),
- dans lequel ledit filtre est conçu de manière réversiblement déformable et
- dans lequel ledit filtre présente un cadre souple de filtre.

13. Système de table de cuisson (1), comportant
- au moins un dispositif d'aspiration de vapeur (2) selon l'une quelconque des revendications 1 à 11 et
- au moins une table de cuisson (3) destinée à échauffer des aliments à cuire.

14. Système de table de cuisson (1) selon la revendication 13, **caractérisé en ce que** l'ouverture d'entrée (11), selon une vue en plan, est entièrement entourée par un plaque de cuisson (6) de la table de cuisson (3).

15. Système de table de cuisson (1) selon la revendication 13 ou 14, **caractérisé en ce que** ledit système es conçu comme appareil combiné.
